# EUROPEAN PATENT SPECIFICATION

(11) **EP 1 147 302 B1**
(45) Date of publication and mention of the grant of the patent: **27.09.2006**
(21) Application number: 99965615.0
(22) Date of filing: 29.11.1999
(51) Int. Cl.: F02F 3/00, F02F 3/28

(54) **PISTON**
KOLBEN
PISTON

(30) Priority: 29.12.1998 SE 9804585
(43) Date of publication of application: 24.10.2001
(73) Proprietor: AB VOLVO, 405 08 Göteborg (SE)
(72) Inventor: MARCIL, Jean-Pierre, Maple Grove, Québec J6N 1P2 (CA)
(74) Representative: Hellbom, Lars Olof
(86) International application number: PCT/SE1999/002217
(87) International publication number: WO 2000/039445

(56) References cited:
- US-A- 3 667 443
- US-A- 4 383 509
- DATABASE WPI Week 199602, Derwent Publications Ltd., London, GB; AN 1996-018100, XP002945363 & JP 7 293 431 A (TOYOTA AUTOMATIC LOOM WORKS) 07 November 1995 & PATENT ABSTRACTS OF JAPAN & JP 07 293 431 A (TOYOTA AUTOM LOOM WORKS LTD) 07 November 1995

## Description

The present invention relates to a combustion engine having at least one cylinder and a piston, designed for reciprocating movement in the cylinder, said piston comprising a lateral surface, which is provided with at least two spaced peripheral piston ring grooves for individual piston rings, and a collection chamber arranged between the piston ring grooves, said collection chamber comprising a peripheral groove in said lateral surface, being adapted to take up uncombusted fuel-air mixture and combustion gases which have passed one of the piston rings and to transport said air-fuel mixture to an opening in the cylinder of an evacuation channel.

It is a known fact that it is not possible to provide piston ring sealing between the pistons and the surrounding cylinder walls in an internal combustion engine which 100% seals off the combustion chambers from the crankcase of the engine. A cer-tain small quantity of combustion gases, here called blow-by, therefore always flows past the piston ring and down into the crankcase of the engine. In order that exces-sive overpressure, partially caused by the blow-by gases, will not occur in the crank-case, the crankcase must be ventilated. The more effective the ventilation is, the lower the overpressure in the crankcase will be and therefore the lower the engine pumping losses will be.

In modem engines, closed crankcase ventilation is used in order to minimize environmental effects. Normally, the blow-by gases are led out from the crankcase via a hose to the inlet manifold of the engine before the throttle and mix with the intake air. In order to separate oil out of the oil mist, which unavoidably is mixed with the blow-by gases, different types of filters and oil traps are used in the crankcase ventilation. All hitherto known crankcase ventilation systems have in common that they have not made it possible to minimize a certain overpressure in the crankcase, which becomes higher the higher the power demand is. This also means that a much higher pressure exists in the crankcase of the engine than in the combustion chamber during the intake stroke and this pressure attempts to press the oil mist in the crankcase past the oil scraper ring of the piston and into the com-bustion chamber of the engine. In order to prevent to the greatest possible extent the oil flow to the combustion chamber, the ring tension must be high for the oil scraper ring and the oil scraper ring is therefore the component which alone causes the greatest internal friction in the engine. The oil which nonetheless unavoidably penetrates into the combustion chamber of the engine not only causes pollution in the engine exhaust gases with consequential strain on the catalytic converter. It also lowers the octane number of the fuel, which in modem engines with knock sensors and automatic ignition advance leads to a retarding of the ignition and thus increased fuel consumption. Last but not least, the oil consumption of the engine itself and the cost of replacing used oil are directly dependent on how much oil penetrates into the combustion chamber because of the pressure difference between the crankcase and the cylinder space above the piston.

US-A-4 363 310 discloses an engine described by way of introduction which makes it possible to maintain close to equilibrium between the pressures in the combustion chamber and the crankcase. This means that an underpressure is present in the crankcase during the inlet stroke. The pressure difference over the piston rings becomes so negligible that the ring tension in the oil scraping ring can be reduced to a fraction of what is normal today without the risk of oil penetration from the crankcase to the combustion chamber. In addition to the direct effects which the pressure balancing gives in the shape of lower oil and fuel consumption, important secondary effects are attained. Lower ring tension, which gives a lower internal friction with consequential lower fuel consumption, leads to lower starting power for the starting motor, i.e. smaller starting motor and starting battery. A smaller quantity of pollution in the exhaust gases caused by oil in the combustion chamber means a lower load on the catalytic converter, which can be made smaller. Finally, the need for external components such as heating arrangements to prevent the blow-by from freezing, oil traps and hoses with associated connection parts can be eliminated, which leads to important cost savings.

It is unavoidable that a small quantity of the blow-by gases, unburnt fuel and other pollutants which reach the crankcase cannot be ventilated out but remain as a sus-pension in the oil in the crankcase and contribute to an accelerated ageing process of the oil, impairing its lubricating qualities. This, in turn, influences the length of the life of the engine.

Since the cylinder in which the piston is designed for reciprocating motion is provided with an evacuation channel which is oriented relative to the collection chamber so that, after a predetermined movement of the piston from its upper or lower dead point, a communication is established between the collection chamber and the evacuation channel, which in turn communicates with advantage with an intake channel of the internal combustion engine.

A purpose of the present invention is in general to provide a piston of the type described by way of introduction, which can take up a large portion of the volume of combusted and/or uncombusted air-fuel mixture which, during the combustion stroke, is pressed past the piston rings, and to obtain a reduction in the pressure of the volume of combusted and/or uncombusted air-fuel mixture taken up in the piston.

This is achieved by an engine having the characterizing features of claim 1.

In this manner, uncombusted fuel-air mixture and combustion gases are prevented from reaching the crankcase. Instead, they are ventilated out directly into the eva-cuation channel and flow to the intake channel, since there is overpressure in the collection chamber while there is underpressure in the evacuation channel. Uncombusted fuel-air mixture trapped beneath the first piston ring would otherwise flow back into the combustion chamber during the expansion stroke as soon as the cylinder pressure drops below the pressure of the mixture, but this would occur too late for combustion of the mixture. By arranging a space in the piston which communicates with the collection chamber, a relatively large volume is created in the piston. This volume is so great that the pressure of the fuel-air mixture and the combustion gases, in the collection chamber and in the space, drops.

The invention will be described in more detail with reference to the accompanying drawings, which show one example, where
Fig. 1 shows a side view of a piston according to the invention,
Fig. 2 shows a cross section along the line II-II in Fig. 1, and
Fig. 3 shows a cross section through a cylinder block in which a piston according to the invention is disposed.

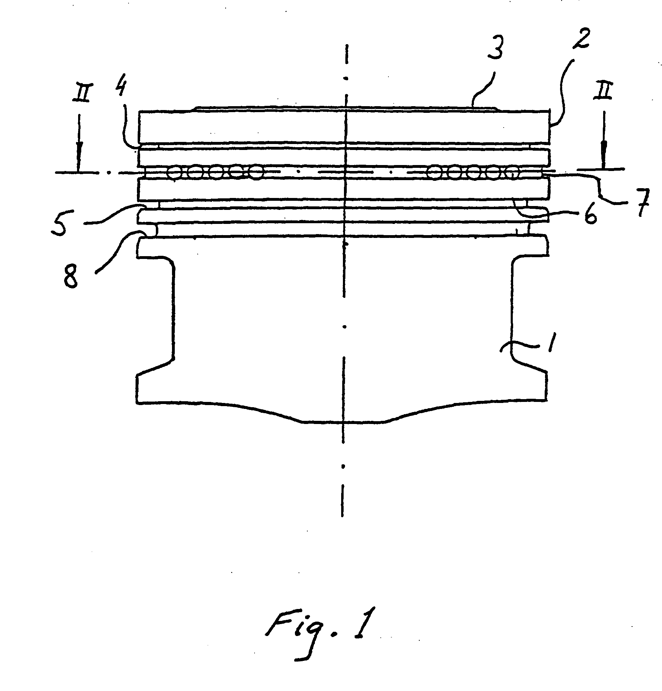

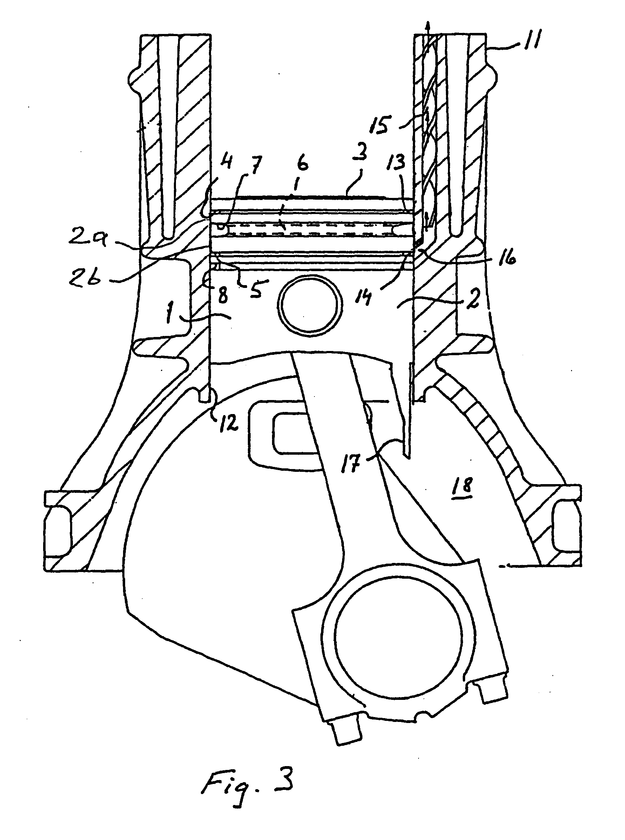

Fig. 1 shows one example of a piston, comprising a lateral surface 2 and a piston top surface 3. The lateral surface 2 is provided with at least two spaced peripheral piston ring grooves 4,5, each to hold a piston ring (shown in Fig. 3). A plurality of spaces in the form of elongated channels 6 are arranged in the piston 1. They open into a collection chamber 7 formed between the piston ring grooves 4,5. The piston is thus made with a first and a second piston ring groove 4,5 between which the collection chamber 7 is formed. The first and second piston ring grooves 4,5 are made to hold a pair of piston rings (not shown in Fig. 1) in the form of compression rings. A third piston ring groove 8 is also arranged in the lateral surface 2 of the piston 1 to hold an oil scraper ring (not shown). The distance between the two piston ring grooves 4,5 is somewhat greater than what is usual in pistons 1 for a conventional multi-cylinder gasoline engine.

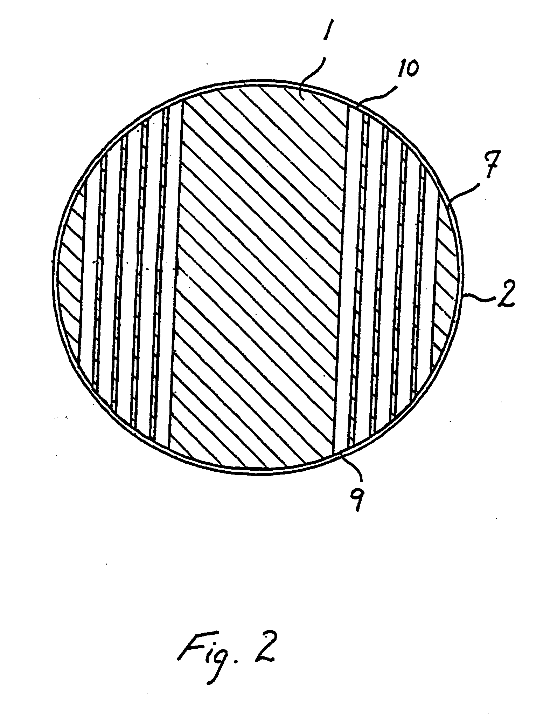

Fig. 2 relates to a cross section through the piston 1 along the line II-II in Fig. 1. The channels 6 are made as through-bores in the piston 1, each opening with a first and a second opening 9,10 into the collection chamber. The channels 6 are essentially parallel to each other. However, the channels 6 can be arranged in different directions in relation to each other. They can also be interconnected, so that they communicates with each other. It is also possible to make the channels 6 as a single cavity.

As can be seen in Figs. 1 and 2, the collection chamber 7 consists of a peripheral groove arranged in the lateral surface 2. The groove is formed to take up uncombusted fuel-air mixture and combustion gases which have passed the piston ring in the first piston ring groove 4. The peripheral groove, which forms the collection chamber 7, can be broader than the piston ring grooves 4,5,8. What is meant by the width of the groove is the dimension of the groove in the axial direction of the piston 1.

The cooperation of the piston 1 with a cylinder 12 in an internal combustion engine 11 will be explained in connection with Fig. 3. Blow-by gases, which during the early expansion stroke of the piston 1 flow past the first piston ring 13 adjacent the piston top surface 3, are retained in the collection chamber 7 and in the channels 6, by the second piston ring 14 in the second piston ring groove 5 on the other side of the collection chamber 7. When the piston 1 has completed most of its expansion stroke, the collection chamber 7 is connected to an evacuation channel opening into the cylinder 12. The evacuation channel 15 is connected to an intake channel (not shown) of the engine 11. The blow-by gas under pressure can now expand and be evacuated to the intake channel via the evacuation channel 15. No additional air or gas is used to press the blow-by gas out. Rather, the gas is evacuated by its own pressure. When the piston 1 after having passed the lower dead center point begins to move upwards during the exhaust stroke, any remaining amount of gas can be evacuated since the collection chamber 7, during the initial upward movement of the piston 1, is still in communication with the evacuation channel 15. If blow-by gas should still remain in the chamber 7 and in the channels 6 during the final portion of the exhaust stroke and during most of the intake stroke, this amount of gas can be evacuated to the intake channel when the chamber 7 and the evacuation channel 15 are again connected to each other.

In all of the operating strokes, the collection chamber 7 is thus joined during certain periods with the evacuation channel 15, and this assures that the collection chamber 7 and the channels 6 will be emptied at the beginning of each expansion stroke.
In order to assure good communication between the collection chamber 7 and the evacuation channel 15, the width of the peripheral groove forming the collection chamber 7 is approximately equal to the height of the opening 16 of the evacuation channel 15 into the cylinder 12. The height of the opening 16 means, in this case, the extent of the opening 16 in the axial direction of the cylinder 12. The height of the lateral surface 2a of the piston 1 between the collection chamber 7 and the piston ring groove 4 and the surface 2b between the piston ring groove 5 and the chamber 7 should each be equal or greater than the height of the opening 16 of the evacuation channel 15. In this way blow-by gases are prevented from flowing past the lateral surfaces 2a, 2b between the collection chamber 7 and the piston ring grooves 4, 5.

One or more channels 6 in the piston 1 provide, together with the collection chamber 7, a relatively large space in the piston 1 to take up a relatively large volume of blow-by gas during the operating cycle of the engine 11. By virtue of the size of the space formed in the piston 1, the pressure of the gases in this space can be reduced and leakage of gas past the second piston ring 14 can be minimized.

Part of the HC-emission which must be neutralized in the catalytic converter of a conventional engine is caused by the quantity of unburnt fuel-air mixture which is pressed past the first compression ring during the compression stroke and is trapped between the compression rings. This mixture normally flows back to the combustion chamber, so-called reverse blow-by, when the pressure there during the expansion stroke is less than the pressure in the mixture between the rings. However, this fuel-air mixture can be accumulated and comes back to the combustion chamber too late for burning and for contributing to the output of the engine. With the help of the evacuation channel 15, the unburnt fuel-air mixture can be evacuated from the chamber 7 and the channels 6 before the pressure in the combustion chamber becomes so low that the mixture can flow past the first piston ring 13 and back into the combustion chamber. Through eliminating this "reverse blow-by", the quantity of HC emission in the exhaust is reduced which means that the size, weight and thus the price of the catalytic converter can be reduced, at the same time as its length of life can be increased.

As can be seen in Fig. 3, the piston can be provided with a shield 17, which functions as a moving valve element which connects the crankcase 18 with the intake channel from the upper dead center point of the piston 1 to approximately halfway through a piston stroke. In this manner, the pressure differential is reduced between the crankcase 18 and the intake channel. Closing the evacuation channel 15 causes a reduction in the inner cyclical pressure pulse effect in the crankcase 18, which could otherwise result in increased oil consumption by transferring oil in suspension to the combustion chamber. The relatively low pressure in the crankcase 18 at low or medium throttle opening contributes to reducing the negative effects of these inner pressure pulses, making it possible to dimension the engine 11 with a smaller crankcase volume than what has hitherto been possible.

## Claims

1. A combustion engine having at least one cylinder and a piston, designed for reciprocating movement in the cylinder (12), said piston (1) comprising a lateral surface (2), which is provided with at least two spaced peripheral piston ring grooves (4,5) for individual piston rings (13,14), and a collection chamber (7) arranged between the piston ring grooves (4,5), said collection chamber com-prising a peripheral groove in said lateral surface (2), being adapted to take up uncombusted fuel-air mixture and combustion gases which have passed one of the piston rings (13) and to transport said air-fuel mixture to an opening (16) in the cylinder (12) of an evacuation channel **characterized in that** at least one cavity (6) in the form of at least one elongated channel (6) having first and second openings (9,10) opening into the collection chamber (7)extends through the piston (1).

2. Engine according to claim 1, **characterized in that** a plurality of channels (6) extend through the piston (1).

3. Engine according to claim 2, **characterized in that** the channels (6) are essentially parallel.

4. Engine according to claim 2 or 3, **characterized in that** the channels (6) are interconnected.

5. Engine according to one of claims 1 - 4, **characterized in that** the channel (6) or the channels consist of bores through the piston (1).

6. Engine according to one of claims 1-5, **characterized in that** the height of the lateral surface (2a) of the piston (1) between the collection chamber (7) and the piston ring groove (4) and the surface (2b) between the collection chamber (7) and the piston ring groove (5) are each equal or greater than the height of the opening (16) of the evacuation channel (15).

## Patentansprüche

1. Verbrennungsmotor mit mindestens einem Zylinder und einem Kolben, der für eine Hubbewegung in dem Zylinder (12) ausgelegt ist, wobei der Kolben (1) eine Seitenfläche (2), die mit mindestens zwei beabstandeten Umfangskolbenringnuten (4, 5) für einzelne Kolbenringe (13, 14) ausgestattet ist, und eine sammelkammer (7), die zwischen den Kolbenringnuten (4, 5) angeordnet ist, aufweist, wobei die Sammelkammer eine Umfangsnut in der Seitenfläche (2) aufweist, die dazu ausgelegt ist, unverbranntes Kraftstoff-Luftgemisch und Verbrennungsgase, die einen der Kolbenringe (13) passiert haben, aufzunehmen und das Luft-Kraftstoffgemisch zu einer Öffnung (16) in dem Zylinder (12) eines Evakuationskanals zu transportieren, **dadurch gekennzeichnet, dass** sich zumindest ein Hohlraum (6) in der Form mindestens eines länglichen Kanals (6) mit einer ersten und einer zweiten Öffnung (9, 10), die sich in die Sammelkammer (7) öffnen, durch den Kolben (1) erstreckt.

2. Motor nach Anspruch 1, **dadurch gekennzeichnet, dass** eine Mehrzahl von Kanälen (6) sich durch den Kolben (1) erstrecken.

3. Motor nach Anspruch 2, **dadurch gekennzeichnet, dass** die Kanäle (6) im wesentlichen parallel sind.

4. Motor nach Anspruch 2 oder 3, **dadurch gekennzeichnet, dass** die Kanäle (6) miteinander verbunden sind.

5. Motor nach einem der Ansprüche 1 - 4, **dadurch gekennzeichnet, dass** der Kanal (6) oder die Kanäle aus Bohrungen durch den Kolben (1) bestehen.

6. Motor nach einem der Ansprüche 1 - 5, **dadurch gekennzeichnet, dass** die Höhe der Seitenfläche (2a) des Kolbens (1) zwischen der Sammelkammer (7) und der Kolbenringnut (4) und der Fläche (2b) zwischen der Sammelkammer (7) und der Kolbenringnut (5) größer oder gleich der Höhe der Öffnung (16) des Evakuationskanals (15) sind.

## Revendications

1. Un moteur à combustion ayant au moins un cylindre et un piston, prévu pour un mouvement alternatif dans le cylindre (12), ledit piston (1) comportant une surface latérale (2), laquelle est pourvue d'au moins deux gorges de segments de piston périphérique, espacées, (4, 5) pour des segments de piston individuels (13, 14), et une chambre collectrice (7) agencée entre les gorges de segments de piston (4, 5), ladite chambre collectrice comportant une gorge périphérique dans ladite surface latérale (2), étant adaptée pour aspirer un mélange de carburant et d'air non brûlé ainsi que des gaz de combustion qui ont passé un des segments de piston (13) et pour transporter ledit mélange de carburant et d'air à une ouverture (16) dans le cylindre (12) vers un conduit d'évacuation **caractérisé en ce qu'**au moins une cavité (6) en forme d'au moins un conduit allongé (6) ayant des première et deuxième ouvertures (9, 10) donnant dans la chambre collectrice (7) s'étend à travers le piston (1).

2. Un moteur selon la revendication 1, **caractérisé en ce qu'**une pluralité de conduits (6) s'étend à travers le piston (1).

3. Un moteur selon la revendication 2, **caractérisé en ce que** les conduits (6) sont essentiellement parallèles.

4. Un moteur selon la revendication 2 ou 3, **caractérisé en ce que** les conduits (6) sont interconnectés.

5. Un moteur selon l'une quelconque des revendications 1-4, **caractérisé en ce que** le conduit (6) ou les conduits consistent en des alésages au travers du piston (1).

6. Un moteur selon l'une quelconque des revendications 1-5, **caractérisé en ce que** la hauteur de la surface latérale (2a) du piston (1) entre la chambre collectrice (7) et la gorge de segment de piston (4) et la surface (2b) entre la chambre collectrice (7) et la gorge de segment de piston (5) sont chacune égales ou plus grandes que la hauteur de l'ouverture (16) du conduit d'évacuation (15).
